# EUROPÄISCHE PATENTSCHRIFT

(11) **EP 2 476 919 B1**
(45) Veröffentlichungstag und Bekanntmachung des Hinweises auf die Patenterteilung: **21.07.2021**
(21) Anmeldenummer: 11194539.0
(22) Anmeldetag: 20.12.2011
(51) Int. Cl.: F16B 25/00, F16B 37/12, F16B 23/00

(54) **SCHRAUBANKER UND VERFAHREN ZUR HERSTELLUNG EINES SCHRAUBANKERS**
SCREW ANCHOR AND METHOD FOR MANUFACTURING A SCREW ANCHOR
VIS D'ANCRAGE ET PROCÉDÉ DE FABRICATION D'UNE VIS D'ANCRAGE

(30) Priorität: 13.01.2011 DE 102011002637
(43) Veröffentlichungstag der Anmeldung: 18.07.2012
(73) Patentinhaber: HILTI Aktiengesellschaft, 9494 Schaan (LI)
(72) Erfinder: Roessner, Marcel, 6830 Rankweil (AT)
(74) Vertreter: Hilti Aktiengesellschaft Corporate Intellectual Property

(56) Entgegenhaltungen:
- EP-A1- 0 915 262
- EP-A1- 1 693 578
- JP-A- 2007 071 017

## Beschreibung

Die Erfindung betrifft einen Schraubanker zum Einsetzen in Beton, mit einem im Wesentlichen zylinderförmigen Grundkörper, an dessen äußerer Mantelfläche ein Außengewinde vorgesehen ist und der eine von einer axialen Stirnfläche ausgehende, in Richtung der Zylinderlängsachse angeordnete Aufnahme für ein Befestigungsmittel aufweist, die eine von der axialen Stirnfläche ausgehende Lastaufnahmestruktur für das Befestigungsmittel aufweist, wobei in der Aufnahme eine sich im Wesentlichen in Richtung der Zylinderlängsachse erstreckende Werkzeugaufnahme vorgesehen ist, wobei sich die Werkzeugaufnahme von der Stirnfläche zum Drehantrieb des Schraubankers in Zylinderlängsrichtung weiter in die Aufnahme erstreckt als die Lastaufnahmestruktur.

Aus der EP 0 915 262 A1 geht ein Gewindeeinsatz mit Außengewinde, Innengewinde und Innensechskant hervor.

Zur Befestigung von Bauteilen in einem Betonuntergrund werden häufig Schraubanker verwendet, die in den Betonuntergrund eingeschraubt werden. Diese haben gegenüber Spreizdübel oder Spreizschlagdübeln den Vorteil, dass ein solcher Schraubanker auch ohne ein zusätzliches Spreizelement sicher im Beton verankert ist und eine reversible Befestigung des Bauteils ermöglicht.

Der Schraubanker hat außenseitig ein Gewinde, mit dem der Schraubanker in ein vorbereitetes Bohrloch im Betonuntergrund eingeschraubt werden kann sowie eine in axialer Richtung verlaufende Aufnahme, in der ein Befestigungsmittel zur Befestigung des Bauteils fixiert werden kann. Die Aufnahme weist dazu eine geeignete Lastaufnahmestruktur, beispielsweise ein Gewinde für eine Schraube auf.

Zum Einschrauben des Schraubankers in den Betonuntergrund ist eine Werkzeugaufnahme erforderlich, an der ein Werkzeug angreifen kann, um den Schraubanker zu drehen. Diese Werkzeugaufnahme ist häufig in oder an der Aufnahme vorgesehen, um den Schraubanker vollständig in den Betonuntergrund einschrauben zu können, sodass dieser bündig mit der Betonoberfläche abschließt. Dies hat aber den Nachteil, dass bei den zum Einschrauben in einen Betonuntergrund erforderlichen hohen Einschraubkräften die Lastaufnahmestruktur der Aufnahme durch das Werkzeug beschädigt werden kann, sodass die Lastaufnahmestruktur nicht nutzbar ist und gegebenenfalls nach der Montage des Schraubankers eine Nachbearbeitung der Lastaufnahmestruktur erforderlich sein kann.

Aufgabe der Erfindung ist es, einen Schraubanker bereitzustellen, der ein einfaches und sicheres Eindrehen des Schraubankers in einen Betonuntergrund ermöglicht und dabei eine Beschädigung der Lastaufnahmestruktur verhindert.

Erfindungsgemäß ist vorgesehen, dass die Werkzeugaufnahme durch mehrere, im Wesentlichen parallel und im Wesentlichen in Zylinderlängsrichtung verlaufende Nuten gebildet ist, welche in radialer Richtung tiefer sind als die Lastaufnahmestruktur.

Die Werkzeugaufnahme ist so lang ausgebildet, dass das Drehmoment, das über das Werkzeug auf den Schraubanker bzw. auf die Aufnahme des Schraubankers aufgebracht wird, nicht vollständig im Bereich der Lastaufnahmestruktur übertragen wird, sondern zumindest teilweise außerhalb dieses Bereichs. Das Drehmoment wird zudem aufgrund der Länge der Werkzeugaufnahme über einen größeren Bereich übertragen, sodass punktuelle starke Belastungen, die zu einer Verformung oder Beschädigung der Lastaufnahmestruktur führen können, deutlich reduziert werden können.

Vorzugsweise erstreckt sich die Werkzeugaufnahme über die gesamte axiale Länge der Aufnahme, sodass die Last über einen möglichst großen Bereich auf den Schraubanker übertragen werden kann. Dies hat zudem den Vorteil, dass eine Torsionsbelastung des Schraubankers reduziert werden kann. Würde das Werkzeug nur über eine geringe Länge an der axialen Stirnfläche am Schraubanker angreifen, würde dies zu Beginn des Anschraubvorgangs aufgrund der hohen Einschraubkräfte zu einer Torsionsbelastung zwischen einem ersten Ende des Schraubankers, an dem das Werkzeug angreift, und dem entgegengesetzten zweiten Ende des Schraubankers, mit dem der Schraubanker bereits in die Betonbohrung eingeführt wird, führen. Durch die lange Werkzeugaufnahme wird gewissermaßen der Lastangriffspunkt über die gesamte Länge der Aufnahme verteilt, und auch näher an das zweite Ende herangerückt, so dass die Torsionsbelastung deutlich reduziert werden kann.

In einer bevorzugten Ausführungsform erstreckt sich die Aufnahme durch den gesamten Grundkörper bis zu einer entgegengesetzten zweiten Stirnfläche. Dadurch ist eine ideale Lastübertragung möglich, da sich das Werkzeug über die gesamte Länge des Schraubankers an der Aufnahme abstützen kann. Dadurch kann vor allem zu Beginn des Einschraubvorgangs ein Verdrehen bzw. eine Torsion des Schraubankers vollständig verhindert werden, da sich der Lastangriffspunkt auf gleicher axialer Höhe mit der Betonoberfläche bzw. mit der Kontaktfläche des Schraubankers mit dem Bohrloch befindet.

Zudem ermöglicht die durchgehende Aufnahme eine besonders leichte Herstellung des Schraubankers. Der Schraubanker kann beispielsweise aus einem langen Rohr hergestellt werden, das bereits innenseitig durchgängig mit der Werkzeugaufnahme versehen ist, wobei das Rohr unter Bildung mehrerer Grundkörper jeweils auf die gewünschte Länge abgelängt wird. Das Gewinde kann vor oder nach dem Ablängen eingebracht werden. Auch ein nachträgliches Einbringen der Werkzeugaufnahme ist deutlich vereinfach, da ein Schneid- oder Fräswerkzeug einfach durch die gesamte Aufnahme durchgeschoben werden kann. Ein Reinigen der Aufnahme von Spännen ist deutlich einfacher als bei einer einseitig geschlossenen Aufnahme.

Die Werkzeugaufnahme ist durch im Wesentlichen in Zylinderlängsachse verlaufende Nuten gebildet, in die vorzugsweise ein Werkzeug in Richtung der Zylinderlängsachse eingeschoben bzw. aus der Werkzeugaufnahme heraus gezogen werden kann.

Gemäß der Erfindung sind mehrere, im Wesentlichen parallel verlaufende Nuten so angeordnet, dass das Werkzeug mittig in der Aufnahme zentriert ist und die Drehachse des Werkzeugs mit der Zylinderlängsachse des Grundkörpers übereinstimmt. Dadurch ist eine gleichmäßige Lastübertragung des Drehmoments auf den Schraubanker möglich.

Die Nuten bilden beispielsweise ein Vielkantprofil, sodass ein herkömmliches Werkzeug, beispielsweise ein Schraubendreher oder ein Torx-Werkzeug in die Werkzeugaufnahme eingreifen kann.

Erfindungsgemäß sind die Nuten in radialer Richtung tiefer ausgebildet als die Lastaufnahmestruktur. Dies bietet mehrere Vorteile. Zum einen ist durch die große Seitenfläche der Nuten eine große Angriffsfläche zur Lastübertragung des Drehmoments bereitgestellt. Diese liegt außerhalb der Lastaufnahmestruktur, sodass das Werkzeug beim Drehen des Schraubankers nicht mit der Lastaufnahmestruktur in Anlage kommt und diese beim Aufbringen des Drehmoments nicht beschädigt werden kann. Zudem ist durch die tieferen Nuten eine einfache Herstellung der Lastaufnahmestruktur möglich. Durch die tiefen Nuten kann ein entsprechendes Schneidwerkzeug in die Aufnahme eingeschoben werden und die Lastaufnahmestruktur durch Drehen dieses Schneidwerkzeugs in die Aufnahme eingebracht werden.

Die Lastaufnahmestruktur ist beispielsweise ein Innengewinde. Das Einbringen eines solchen Gewindes ist bei einem erfindungsgemäßen Schraubanker wesentlich einfacher als bei einem herkömmlichen Schraubanker. Das Gewinde wird üblicherweise mit einem Gewindeschneider, der von der axialen Stirnfläche in die Aufnahme eingeschraubt wird, in die Aufnahme eingeschnitten. Der Gewindeschneider kann dabei pro Umdrehung des Gewindeschneiders auch nur eine Gewindeumdrehung, also einen um 360 umlaufenden Gewindeabschnitt schneiden. Zur Herstellung eines längeren Gewindes sind also entsprechend viele Umdrehungen des Gewindeschneidwerkzeugs erforderlich. Ebenso muss das Gewindeschneidwerkzeug nach Fertigstellung des Gewindes über die gesamte Länge des Gewindes aus diesem herausgedreht werden.

Bei einem erfindungsgemäßen Schraubanker kann ein Schneidwerkzeug verwendet werden, das mehrere in axialer Richtung hintereinander angeordnete, radial vorstehende Schneidkanten aufweist, wobei vorzugsweise eine Anzahl Schneidkanten vorgesehen ist, die der Anzahl der gewünschten Gewindeumdrehungen entspricht. Das Werkzeug wird in die Aufnahme eingeschoben, wobei die Schneidkanten in einer der Nuten eingeschoben werden. Ist das Schneidwerkzeug in die Aufnahme eingeschoben, wird das Schneidwerkzeug um seine Längsachse gedreht, wobei jede Schneidkante eine vollständige Gewindeumdrehung des Gewindes schneidet. Die gesamte Länge des Gewindes kann also mit einer Umdrehung des Schneidwerkzeugs geschnitten werden. Anschließend wird das Schneidwerkzeug so ausgerichtet, dass die Schneidkanten in einer Nut liegen, so dass das Schneidwerkzeug in axiale Richtung aus der Aufnahme gezogen werden kann. Das Gewinde kann dadurch wesentlich schneller hergestellt werden. Dies wird dadurch ermöglicht, dass der Gewindegrund weniger weit radial nach außen ragt als die Ausnehmung der Lastaufnahme. Bei mehreren gleichmäßig verteilten Nuten kann auch ein Werkzeug mit mehreren in Umfangsrichtung verteilt angeordneten Schneidkantenreihen verwendet werden, so dass das Schneidwerkzeug zum Schneiden der gesamten Gewindelänge nur um den Winkel zwischen zwei benachbarten Nuten gedreht werden muss.

Die Aufnahme des Schraubankers ist vorzugsweise in Umfangsrichtung vollständig geschlossen.

Der Grundkörper kann beispielsweise eine rohrförmige Gestalt aufweisen.

Insbesondere kann ein Verfahren zur Herstellung eines erfindungsgemäßen Schraubankers mit folgenden Schritten vorgesehen sein:
- Bereitstellen eines Grundkörpers mit einer länglichen Aufnahme,
- Einbringen der Werkzeugaufnahme in die Aufnahme,
- anschließendes Einbringen der Lastaufnahmestruktur.

Vorzugsweise wird bei einem solchen Verfahren ein Rohr bereitgestellt, in dem innenseitig durchgängig die Werkzeugaufnahme vorhanden ist, wobei vor oder nach dem Einbringen der Lastaufnahmestruktur das Rohr unter Bildung mehrerer Grundkörper abgelängt wird.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Schraubankers,
- Figur 2 eine Draufsicht auf den Schraubanker aus Figur 1,
- Figur 3 eine Schnittansicht durch den Schraubanker aus Figur 1 längs der Linie III-III in Figur 2,
- Figur 4 eine Schnittansicht durch den Schraubanker im längs der Linie IV-IV in Figur 2, und
- Figur 5 ein Werkzeug zum Einschrauben des Schraubankers aus Figur 1.

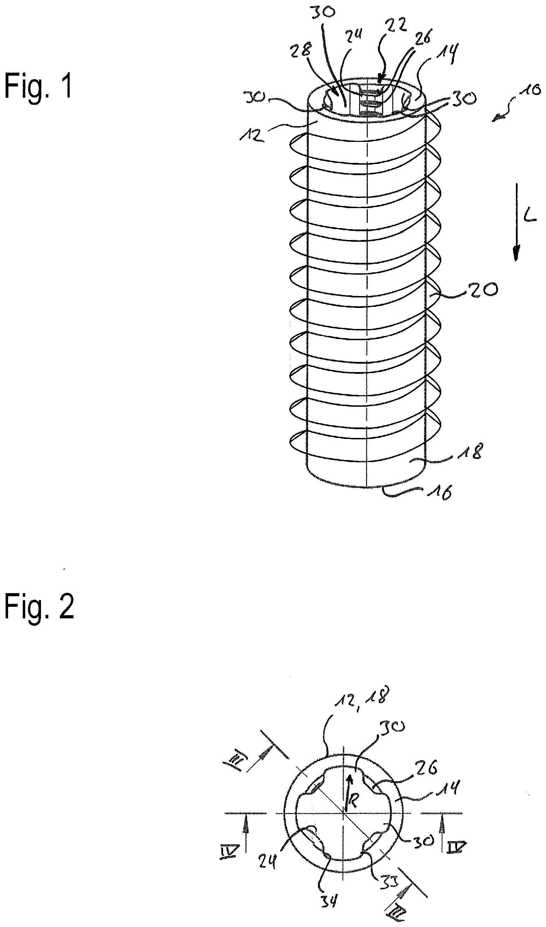

In Figur 1 ist ein Schraubanker 10 zum Einschrauben in Beton gezeigt. Der Schraubanker 10 kann zur Befestigung eines Bauteils an einem Betongrundkörper in eine Bohrung des Betongrundkörpers eingeschraubt werden. Anschließend kann ein am Betonteil zu befestigendes Bauteil beispielsweise mit einem zusätzlichen Befestigungselement am Schraubanker 10 montiert und somit am Betonteil befestigt werden.

Der Schraubanker 10 hat einen zylinderförmigen Grundkörper 12 mit einer ersten axialen Stirnfläche 14, einer zweiten axialen Stirnfläche 16 sowie einer Mantelfläche 18. Auf der Mantelfläche 18 des Grundkörpers 12 ist ein Außengewinde 20 vorgesehen, mit dem der Schraubanker 10 in eine Bohrung in einem Betonkörper eingeschraubt und dadurch in diesem fixiert werden kann.

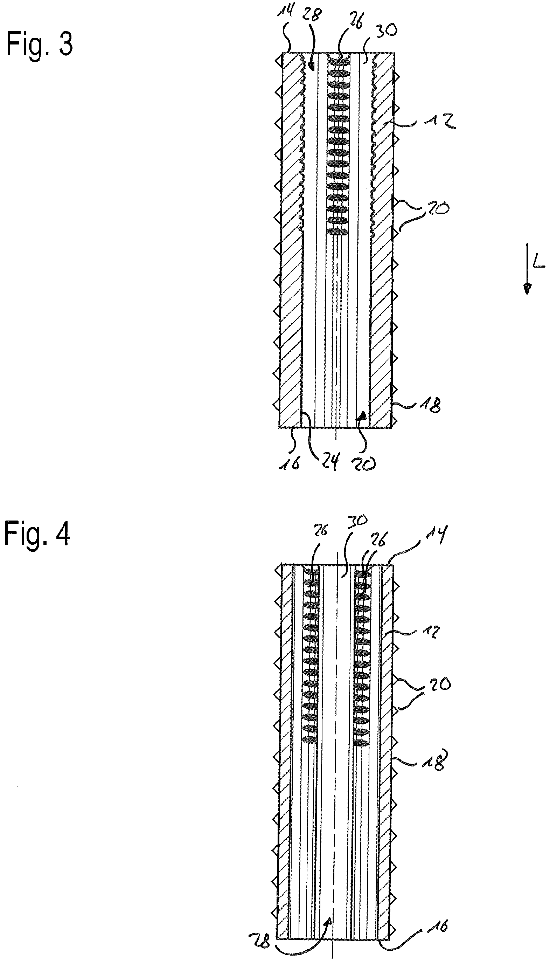

Der Grundkörper 12 hat des Weiteren eine Aufnahme 22, die sich, wie insbesondere in den Figuren 3 und 4 zu sehen ist, von der ersten Stirnfläche 14 über die gesamte Länge des Grundkörpers 12 bis zur zweiten axialen Stirnfläche 16 erstreckt, so dass der Grundkörper 12 eine im Wesentlichen rohrförmige Gestalt hat.

An der Innenwandung 24 der Aufnahme 22 ist eine Lastaufnahmestruktur 26 vorgesehen, die sich von der ersten Stirnfläche 14 in Richtung der Zylinderlängsachse L in die Aufnahme 22 erstreckt. Die Lastaufnahmestruktur 26 ist hier durch ein Innengewinde gebildet, in das ein Befestigungsmittel mit einem entsprechenden Außengewinde eingeschraubt und dadurch am Schraubanker 10 fixiert werden kann.

Um den Schraubanker 10 in die Bohrung des Betongrundkörpers einschrauben zu können, ist eine Werkzeugaufnahme 28 vorgesehen, in die ein Werkzeug in Richtung der Zylinderlängsachse L zur Übertragung eines Drehmoments auf den Schraubanker 10 eingeschoben werden kann. Die Werkzeugaufnahme 28 ist hier durch vier in Zylinderlängsrichtung L verlaufende Nuten 30 gebildet ist, die sich von der Innenwandung 24 der Aufnahme 22 in radialer Richtung R nach außen erstrecken. Die Lastaufnahmestruktur 26 und die Werkzeugaufnahme 28 überlagern sich folglich.

Wie insbesondere in Figur 2 zu sehen ist, sind die vier Nuten 30 in Umfangsrichtung gleichmäßig an der Innenwandung 24 der Aufnahme 22 verteilt angeordnet, so dass der Winkel zwischen zwei benachbarten Nuten 30 90° beträgt. Die Anzahl sowie die Anordnung der Nuten 30 kann aber auch beliebig verändert werden. Vorzugsweise sind die Nuten 30 aber so angeordnet, dass die Achse des Drehmoments, das mit dem Werkzeug auf den Schraubanker 10 übertragen wird, auf der Zylinderlängsachse L liegt.

Wie insbesondere in den Figuren 3 und 4 zu sehen ist, erstrecken sich die Nuten 30 der Werkzeugaufnahme 28 über die gesamte Länge der Aufnahme, also über die gesamte Länge des Grundkörpers 12 des Schraubankers 10, während die durch das Innengewinde gebildete Lastaufnahmestruktur 26 sich von der ersten axialen Stirnfläche 14 ausgehend lediglich über annähernd die halbe Länge der Aufnahme 22 erstreckt. Die durch die Nuten 30 gebildete Werkzeugaufnahme 28 erstreckt sich also in Richtung der Zylinderlängsachse L von der ersten Stirnfläche 14 ausgehend weiter in die Aufnahme 22 als die Lastaufnahmestruktur 26.

Wie in Figur 2 zu sehen ist, sind die Nuten 30 in radialer Richtung R zudem tiefer ausgebildet als die Lastaufnahmestruktur 26. Das heißt, die Seitenwände 33 der Nuten 30 liegen auch in radialer Richtung betrachtet im Wesentlichen außerhalb der Lastaufnahmestruktur 26. In Umfangsrichtung sind die entsprechenden Vertiefungen zueinander versetzt.

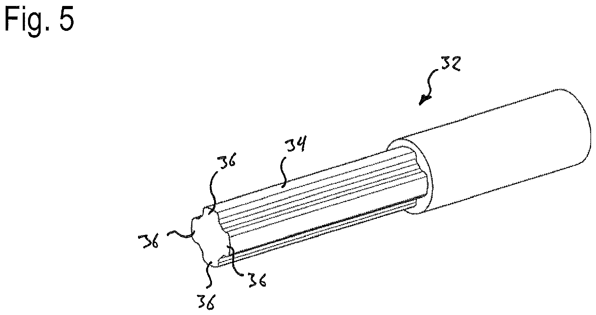

Ein Werkzeug 32 zum Einschrauben des Schraubankers 10 ist beispielsweise in Figur 5 dargestellt. Das Werkzeug hat eine Haltestruktur 34, die vier kreuzförmig angeordnete axiale Leisten 36 aufweist. Die Haltestruktur 34 des Werkzeugs kann in die Aufnahme 22 des Schraubankers 10 eingeschoben werden, wobei die Leisten 36 in die Nuten 30 eindringen.

Die Haltestruktur 34 bzw. die Leisten 36 sind im Wesentlichen im Querschnitt betrachtet komplementär zum Querschnitt der Aufnahme 22 bzw. der Nuten 30, so dass die Leisten 36 ein Drehmoment auf den Schraubanker übertragen können. Die Länge der Haltestruktur 34 entspricht im Wesentlichen der Länge der Aufnahme 22, also hier der Länge des Schraubankers 10, so dass das Werkzeug 32 über die gesamte Länge des Schraubankers 10 an den Nuten 30 angreifen kann.

Dies hat den Vorteil, dass das Drehmoment gleichmäßig auf den Schraubanker 10 übertragen werden kann. Würde das Werkzeug 32 nur an der ersten Stirnfläche 14 bzw. am an die erste Stirnfläche 14 angrenzenden Bereich der Aufnahme 22 angreifen, würde es vor allem zu Beginn des Einschraubvorgangs aufgrund der zum Einschrauben des Schraubankers 10 erforderlichen hohen Kräfte zu einer Torsion des Schraubankers 10 zwischen der zweiten Stirnfläche 16, die schon in die Bohrung eingeschraubt ist, und der ersten Stirnfläche 14, an der das Werkzeug 32 angreift, kommen. Da das Werkzeug 32 über die gesamte Länge des Schraubankers 10 an diesem angreift, ist eine solche Verdrehung ausgeschlossen.

Zudem wird die punktuelle Belastung auf die Nuten 30 aufgrund der großen Übertragungsfläche so weit reduziert, dass eine Beschädigung der Aufnahme 22 und somit auch der Lastaufnahmestruktur 26 durch das Werkzeug verhindert wird. Da die Werkzeugaufnahme 28 länger ausgebildet ist als die Lastaufnahmestruktur 26, erfolgt ein Teil der Drehmomentübertragung außerhalb der Lastaufnahmestruktur 26, so dass die Belastung auf die Aufnahme 22 im Bereich der Lastaufnahmestruktur 26 nochmals verringert und somit die Gefahr einer Beschädigung der Lastaufnahmestruktur 26 weiter reduziert werden kann. Da die Nuten 30 tiefer ausgebildet als die Lastaufnahmestruktur 26, greift das Werkzeug 32 nicht im Bereich der Lastaufnahmestruktur 26 an der Aufnahme 22 an, wodurch die Lastaufnahmestruktur 26 zusätzlich vor einer Beschädigung durch das Werkzeug 32 geschützt ist.

Neben der besseren Drehmomentübertragung bietet der Schraubanker 10 einen weiteren Vorteil, nämlich die wesentlich einfachere Herstellung. Der Grundkörper 12 wird beispielsweise aus einem Rohr hergestellt, in das vor oder nach dem Ablängen auf die gewünschte Schraubankerlänge die Werkzeugaufnahme 28 eingebracht wird, zum Beispiel beim Strangpressen. Die Lastaufnahmestruktur 26 kann anschließend in einen weiteren Verfahrensschritt eingebracht werden.

Bei einem herkömmlichen Schraubanker erfolgt das Einbringen einer Lastaufnahmestruktur 26 beispielsweise bei einem Gewinde mit einem Gewindeschneider, der von der ersten axialen Stirnfläche 14 in die Aufnahme 22 eingeschraubt wird. Der Gewindeschneider kann dabei pro Umdrehung des Gewindeschneiders nur eine Gewindeumdrehung schneiden, so dass zur Herstellung eines längeren Gewindes eine entsprechend hohe Anzahl Umdrehungen des Gewindeschneidwerkzeugs erforderlich sind. Ebenso muss das Gewindeschneidwerkzeug nach Fertigstellung des Gewindes über die gesamte Gewindelänge aus diesem herausgedreht werden.

Bei einem erfindungsgemäßen Schraubanker 10 kann ein Schneidwerkzeug verwendet werden, das mehrere in axialer Richtung hintereinander angeordnete, radial vorstehende Schneidkanten aufweisen, vorzugsweise eine Anzahl Schneidkanten, die der Anzahl der gewünschten Gewindeumdrehungen entspricht. Das Schneidwerkzeug wird vollständig in die Aufnahme 22 eingeschoben, wobei die Schneidkanten in einer der Nuten 30 eingeschoben werden. Ist das Schneidwerkzeug in die Aufnahme 22 eingeschoben, wird das Schneidwerkzeug um seine Längsachse gedreht, wobei durch jedes Schneidwerkzeug eine komplette Gewindeumdrehung geschnitten wird. Die gesamte Länge des Gewindes kann also mit einer Umdrehung des Schneidwerkzeugs geschnitten werden.

Anschließend wird das Schneidwerkzeug so ausgerichtet, dass die Schneidkanten in einer Nut 30 liegen, so dass das Schneidwerkzeug in axialer Richtung, ohne Drehung des Schneidwerkzeugs, aus der Aufnahme 22 gezogen werden kann. Bei mehreren gleichmäßig verteilten Nuten 30 kann auch ein Schneidwerkzeug mit mehreren in Umfangsrichtung verteilt angeordneten Schneidkanten verwendet werden, so dass das Schneidwerkzeug zum Schneiden der gesamten Gewindelänge nur um den Winkel zwischen zwei benachbarten Nuten 30 gedreht werden muss.

Die Herstellung des Schraubankers 10 kann darüber hinaus weiter vereinfacht werden, indem ein Rohr bereitgestellt wird, in dem innenseitig bereits eine Werkzeugaufnahme 28 vorhanden ist. Zur Herstellung des Schraubankers 10 muss dieses Rohr nur auf die gewünschte Länge des Grundkörpers abgelängt und die Lastaufnahmestruktur 26 in die Aufnahme 22 eingebracht werden.

## Patentansprüche

1. Schraubanker (10) zum Einsetzen in Beton, mit einem im Wesentlichen zylinderförmigen Grundkörper (12), an dessen äußerer Mantelfläche (18) ein Außengewinde (20) vorgesehen ist und der eine von einer axialen Stirnfläche (14) ausgehende, in Richtung der Zylinderlängsachse (L) angeordnete Aufnahme (22) für ein Befestigungsmittel aufweist, die eine von der axialen Stirnfläche (14) ausgehende Lastaufnahmestruktur (26) für das Befestigungsmittel aufweist,
wobei in der Aufnahme (22) eine sich im Wesentlichen in Richtung der Zylinderlängsachse (L) erstreckende Werkzeugaufnahme (28) vorgesehen ist, **dadurch gekennzeichnet, dass** sich die Werkzeugaufnahme (28) von der Stirnfläche (14) zum Drehantrieb des Schraubankers (10) in Zylinderlängsrichtung (L) weiter in die Aufnahme (22) erstreckt als die Lastaufnahmestruktur (26), und dass die Werkzeugaufnahme (28) durch mehrere, im Wesentlichen parallel und im Wesentlichen in Zylinderlängsrichtung (L) verlaufende Nuten (30) gebildet ist, welche in radialer Richtung tiefer sind als die Lastaufnahmestruktur (26).

2. Schraubanker nach Anspruch 1, **dadurch gekennzeichnet, dass** sich die Werkzeugaufnahme (28) über die gesamte axiale Länge der Aufnahme (22) erstreckt.

3. Schraubanker nach Anspruch 1 oder 2, **dadurch gekennzeichnet, dass** sich die Aufnahme (22) durch den gesamten Grundkörper (12) bis zu einer entgegengesetzten zweiten Stirnfläche (16) erstreckt.

4. Schraubanker nach einem der vorhergehenden Ansprüche, **dadurch gekennzeichnet, dass** die Nuten (30) ein Vielkantprofil bilden.

5. Schraubanker nach einem der vorhergehenden Ansprüche, **dadurch gekennzeichnet, dass** die Lastaufnahmestruktur (26) ein Innengewinde ist.

6. Schraubanker nach einem der vorhergehenden Ansprüche, **dadurch gekennzeichnet, dass** die Aufnahme (22) in Umfangsrichtung (U) vollständig geschlossen ist.

7. Schraubanker nach einem der vorhergehenden Ansprüche, **dadurch gekennzeichnet, dass** der Grundkörper (12) eine rohrförmige Gestalt hat.

## Claims

1. Screw anchor (10) for insertion into concrete, comprising a substantially cylindrical main body (12), on the outer lateral surface (18) of which an external thread (20) is provided and which has a receptacle (22) for a fastening means, which receptacle starts from an axial end face (14), is arranged in the direction of the cylinder longitudinal axis (L) and has a load-bearing structure (26) for the fastening means that starts from the axial end face (14), a tool holder (28) extending substantially in the direction of the cylinder longitudinal axis (L) being provided in the receptacle (22), **characterized in that** the tool holder (28) extends, from the end face (14) to the rotary drive of the screw anchor (10) in the cylinder longitudinal direction (L), further into the receptacle (22) than the load-bearing structure (26), and **in that** the tool holder (28) is formed by a plurality of grooves (30) which extend substantially in parallel and substantially in the cylinder longitudinal direction (L) and are deeper in the radial direction than the load-bearing structure (26).

2. Screw anchor according to claim 1, **characterized in that** the tool holder (28) extends over the entire axial length of the receptacle (22).

3. Screw anchor according to either claim 1 or claim 2, **characterized in that** the receptacle (22) extends through the entire main body (12) to an opposite second end face (16).

4. Screw anchor according to any of the preceding claims, **characterized in that** the grooves (30) form a polygonal profile.

5. Screw anchor according to any of the preceding claims, **characterized in that** the load-bearing structure (26) is an internal thread.

6. Screw anchor according to any of the preceding claims, **characterized in that** the receptacle (22) is completely closed in the circumferential direction (U).

7. Screw anchor according to any of the preceding claims, **characterized in that** the main body (12) has a tubular shape.

## Revendications

1. Vis d'ancrage (10) permettant l'insertion dans le béton, comportant un corps de base (12) sensiblement cylindrique, un filetage externe (20) étant prévu sur la surface d'enveloppe externe (18) de ce dernier et lequel corps de base présente un logement (22) partant d'une face frontale (14) axiale et disposé dans la direction de l'axe longitudinal de cylindre (L) destiné à un moyen de fixation, lequel logement présente une structure de logement de charge (26) destinée au moyen de fixation et partant de la face frontale (14) axiale,
un logement d'outil (28) s'étendant sensiblement dans la direction de l'axe longitudinal de cylindre (L) étant prévu dans le logement (22), **caractérisée en ce que** le logement d'outil (28) s'étend, depuis la face frontale (14) pour l'entraînement rotatif de la vis d'ancrage (10) dans la direction longitudinale de cylindre (L), plus loin dans le logement (22) que la structure de logement de charge (26), et
**que** le logement d'outil (28) est formé par une pluralité de rainures (30) s'étendant sensiblement parallèlement et sensiblement dans la direction longitudinale de cylindre (L) et étant plus profondes dans la direction radiale que la structure de logement de charge (26).

2. Vis d'ancrage selon la revendication 1, **caractérisée en ce que** le logement d'outil (28) s'étend sur toute la longueur axiale du logement (22).

3. Vis d'ancrage selon la revendication 1 ou 2, **caractérisée en ce que** le logement (22) s'étend à travers tout le corps de base (12) jusqu'à une seconde face frontale (16) opposée.

4. Vis d'ancrage selon l'une des revendications précédentes, **caractérisée en ce que** les rainures (30) forment un profil polygonal.

5. Vis d'ancrage selon l'une des revendications précédentes, **caractérisée en ce que** la structure de logement de charge (26) est un filetage intérieur.

6. Vis d'ancrage selon l'une des revendications précédentes, **caractérisée en ce que** le logement (22) est complètement fermé dans la direction circonférentielle (U).

7. Vis d'ancrage selon l'une des revendications précédentes, **caractérisée en ce que** le corps de base (12) est de forme tubulaire.
